Europäisches Patentamt

European Patent Office

Office européen des brevets

(19)

(11) Numéro de publication : **0 566 512 A1**

# (12) DEMANDE DE BREVET EUROPEEN

(21) Numéro de dépôt : **93460018.0**

(22) Date de dépôt : **16.04.93**

(51) Int. Cl.⁵ : **G07F 7/10,** G06F 12/14, G06F 1/00

(30) Priorité : **17.04.92 FR 9204973**

(43) Date de publication de la demande :
**20.10.93 Bulletin 93/42**

(84) Etats contractants désignés :
**DE GB IT NL**

(71) Demandeur : **INNOVATRON TERMINAUX S.A.**
**137 boulevard de Sébastopol**
**F-75002 Paris (FR)**

(72) Inventeur : **Colnot, Cédric**
**17 rue J.J. Rousseau**
**F-94200 Ivry sur Seine (FR)**

(74) Mandataire : **Vidon, Patrice**
**Cabinet Patrice Vidon Immeuble Germanium**
**80, Avenue des Buttes de Coesmes**
**F-35700 Rennes (FR)**

(54) **Procédé de contrôle d'accès du type autorisant l'accès à une fonction d'exploitation d'un module d'exploitation à l'aide d'un mot de contrôle.**

(57) L'invention concerne un procédé de contrôle d'accès du type autorisant l'accès à une fonction d'exploitation (31) d'un module d'exploitation (32) à l'aide d'un mot de contrôle (33). Selon l'invention, ledit procédé comprend les étapes suivantes :

— on stocke dans ledit module d'exploitation (32) d'une part un mot de calcul interne (34) distinct de ladite clé d'accès (33), et d'autre part une fonction de combinaison (35) ;

— on fournit un mot de calcul externe (36) permettant de calculer une valeur de mot de contrôle (33) en combinant ledit mot interne (34) et ledit mot externe (36) à l'aide de ladite fonction de combinaison (35) , ledit mot de calcul externe (36) n'étant pas stocké dans le module d'exploitation (32) ;

ledit mot de contrôle (33) n'apparaissant que de façon temporaire et fugitive dans le module d'exploitation (32) pendant un laps de temps prédéterminé nécessaire à l'accès à ladite fonction d'exploitation (31).

et ledit mot externe (36) est un mot de validation calculé par un module d'habilitation (37) à partir d'un mot témoin (39) fourni par ledit module d'exploitation (32).

Le mot de contrôle peut servir à calculer une valeur d'empreinte à l'aide d'une fonction irréversible, afin d'effectuer un contrôle d'accès logique par comparaison avec une empreinte stockée dans le module d'exploitation.

Fig. 2

EP 0 566 512 A1

Jouve, 18, rue Saint-Denis, 75001 PARIS

Le domaine de l'invention est celui des fonctions de contrôle d'accès susceptibles d'être mises en oeuvre dans des systèmes électroniques.

Plus précisément, l'invention concerne un procédé de contrôle d'accès du type autorisant l'accès à une fonction d'exploitation implantée dans un module d'exploitation en utilisant un mot de contrôle constitué par un code numérique.

L'invention a de nombreuses applications. Notamment, le procédé selon l'invention permet par exemple de réaliser le chiffrement/déchiffrement de données stockées de façon chiffrée dans la mémoire du module d'exploitation (accès physique) de façon à pouvoir lire ou écrire ces données chiffrées dans la mémoire et/ou à vérifier préalablement un droit d'accès au module d'exploitation (accès logique).

De façon connue, les procédés de contrôle d'accès utilisent généralement un code d'accès dont la valeur numérique est généralement :
d'une part,
- soit connue et conservée secrètement par un usager (le code d'accès s'appelle alors par exemple mot de passe ou code confidentiel, en anglais "PIN : Personal Identification Number"), l'usager fournissant ce "mot de passe" au module d'exploitation lorsqu'il désire utiliser la fonction d'exploitation située sur ce module ;
- soit stockée dans un module d'habilitation (le code d'accès s'appelle alors par exemple mot d'autorisation), le module d'habilitation fournissant ce "mot d'autorisation" au module d'exploitation lorsqu'un usager met ces deux modules en communication afin d'utiliser la fonction d'exploitation située sur le module d'exploitation ; dans ce second cas, l'usager n'a pas besoin de connaître ce mot d'autorisation mais possède l'autorisation d'accès par le seul fait qu'il l'a reçue du module d'habilitation ;
d'autre part, stockée dans le module d'exploitation afin d'être comparée à la valeur numérique fournie par l'usager ou le module d'habilitation.

Ce type de procédé de contrôle d'accès présente en fait un certain nombre de vulnérabilités.

Dans tous les cas, et particulièrement lorsqu'il est stocké dans le module d'exploitation, le mot de contrôle présente ainsi le risque de pouvoir être retrouvé par analyse des données résidant dans le module d'exploitation, et donc utilisé par un usager non autorisé.

Par ailleurs, la valeur du mot de contrôle est souvent prédéterminée et donc imposée à l'usager. Dans ce cas, la valeur du mot de contrôle doit être communiquée à l'usager avant sa première demande d'accès, puis stockée d'une part par l'usager et d'autre part par le module d'exploitation. La confidentialité du mot de contrôle lors de sa communication, comme lors de son stockage, n'est pas parfaite.

Afin de pallier cet inconvénient, une solution connue consiste à stocker dans le module d'exploitation une empreinte du mot de contrôle plutôt que le mot de contrôle lui-même. L'empreinte est calculée au moyen d'une fonction irréversible (de cette façon, un pirate ne peut retrouver le mot d'origine à partir de l'empreinte stockée dans le module d'exploitation). Ensuite, lors d'un accès au module d'exploitation, on calcule une empreinte du mot de contrôle fourni par l'usager ou par le module d'habilitation à l'aide de la même fonction irréversible. Cette empreinte courante est comparée à l'empreinte stockée, et l'accès (logique) à la fonction d'exploitation n'est autorisée qu'en cas d'égalité des deux empreintes.

Ceci ne résoud toutefois pas le problème du risque de divulgation du mot de contrôle, voire du retrait de l'habilitation à une personne préalablement autorisée.

Pour résoudre ce problème et augmenter la sécurité d'un tel procédé de contrôle d'accès, une solution consiste à changer fréquemment la valeur du mot de contrôle. Mais, d'une part cela oblige l'usager à mémoriser une nouvelle valeur ou bien à modifier le contenu du module d'habilitation, et d'autre part l'empreinte du mot de contrôle stockée dans le module d'exploitation doit également être modifiée.

De plus, un tel changement est particulièrement complexe à mettre en oeuvre lorsque le mot de contrôle sert à chiffrer ou déchiffrer des données mémorisées de façon chiffrée dans le module d'exploitation. En effet, dans ce cas, le changement de mot de contrôle entraîne un changement de chiffrement, l'ensemble de la mémoire devant être déchiffré à l'aide de l'ancien mot de contrôle avant d'être à nouveau chiffré à l'aide du nouveau mot de contrôle.

Enfin, l'accès de plusieurs usagers à un même module d'exploitation peut être envisagé, mais l'unicité du mot de contrôle implique sa reproduction et sa communication en autant d'exemplaires que d'usagers. La sécurité d'un tel procédé de contrôle d'accès multiutilisateurs est donc limitée.

L'invention a notamment pour objectif de pallier ces différents inconvénients de l'état de la technique.

Plus précisément, un objectif de l'invention est de fournir un procédé de contrôle d'accès par mot de contrôle dans lequel le mot de contrôle n'est ni connu de l'usager, ni stocké dans le module d'exploitation.

Un autre objectif de l'invention est de fournir un tel procédé permettant de reconstruire de façon volatile un secret pouvant servir, par exemple, soit à vérifier des droits d'accès (accès logique), soit à contrôler le chiffrement/déchiffrement de données stockées de façon permanente en mémoire (accès physique).

Dans tous les cas, l'usager ne doit pas avoir connaissance du mot de contrôle proprement dit, lequel en outre n'est pas conservé dans le module d'exploitation.

Un autre objectif de l'invention est de permettre à l'usager de changer de code d'accès sans qu'il soit nécessaire de changer le mot de contrôle. Ceci est particulièrement avantageux lorsque le mot de contrôle sert à chiffrer ou déchiffrer des données mémorisées dans le module d'exploitation.

Un autre objectif de l'invention est de fournir un procédé de contrôle d'accès multiutilisateurs à mot de contrôle unique dans lequel chaque usager posséde son propre code d'accès.

Un autre objectif est de subordonner l'accès à la fonction d'exploitation du module d'exploitation à une fonction cryptographique d'habilitation qui a la particularité de permettre de faire calculer à un module d'habilitation extérieur au module d'exploitation un mot de validation d'habilitation servant au calcul du mot de contrôle, en partant d'un mot témoin fourni par le module d'exploitation. A aucun moment, ni la connaissance du mot témoin, ni la connaissance du mot de validation, ne permettent de déterminer le mot de contrôle. En effet, le mot témoin envoyé au module d'habilitation par le module d'exploitation (et permettant de calculer le mot de validation) ainsi que le mot de validation renvoyé par le module d'habilitation au module d'exploitation (et permettant de calculer le mot de contrôle) sont totalement indépendants du mot de contrôle.

Ces objectifs, ainsi que d'autres qui apparaîtront par la suite, sont atteints selon l'invention à l'aide d'un procédé de contrôle d'accès du type autorisant l'accès à une fonction d'exploitation d'un module d'exploitation à l'aide d'un mot de contrôle , caractérisé en ce que ledit procédé comprend les étapes suivantes :

- on stocke dans ledit module d'exploitation :
  . d'une part un mot de calcul interne distinct dudit mot de contrôle;
  . d'autre part une fonction de combinaison ;
- on fournit un mot de calcul externe permettant de calculer une valeur de mot de contrôle en combinant ledit mot interne et ledit mot externe à l'aide de ladite fonction de combinaison, ledit mot de calcul externe n'étant pas stocké dans le module d'exploitation ;
  ledit mot de contrôle n'apparaissant que de façon temporaire et fugitive dans le module d'exploitation pendant un laps de temps prédéterminé nécessaire à l'accès à ladite fonction d'exploitation ;

et en ce que ledit mot externe est un mot de validation calculé par un module d'habilitation à partir d'un mot témoin fourni par ledit module d'exploitation.

De cette façon, on dissocie le mot de contrôle réel du mot externe de telle façon que le mot de contrôle ne soit pas stocké de façon permanente dans le module d'exploitation. Le fait qu'il n'y apparaisse que de façon fugitive, et seulement au moment où l'usager autorisé a fourni son module d'exploitation, constitue une bonne parade aux tentatives de récupération du mot de contrôle au moyen d'une analyse par effraction du module d'exploitation.

Ainsi, à aucun moment, le module d'habilitation n'a connaissance de la clé d'accès. En d'autres termes, ni la connaissance du mot de contrôle, ni la connaissance du mot de validation ne permettent de déterminer le mot de contrôle.

Avantageusement :
- ledit mot témoin est constitué par un aléa chiffré selon une première fonction de chiffrement,
- ledit aléa est retrouvé par ledit module d'habilitation grâce au chiffrement dudit mot témoin par une seconde fonction de chiffrement, lesdites première et seconde fonctions de chiffrement étant deux fonctions réciproques,
- ledit mot de validation est constitué par ledit aléa retrouvé chiffré selon ladite seconde fonction de chiffrement,
- ledit mot interne est constitué par un cryptogramme du mot de contrôle avec ledit aléa,
- ledit mot de contrôle est reconstitué dans le module d'exploitation en combinant à l'aide de ladite fonction de combinaison ledit mot interne avec ledit mot de validation, ladite fonction de combinaison permettant d'une part de retrouver ledit aléa grâce au chiffrement dudit mot de validation par ladite première fonction de chiffrement et d'autre part de combiner, selon un opérateur mathématique prédéterminé, ledit aléa retrouvé et ledit mot interne.

De façon avantageuse, ledit opérateur mathématique prédéterminé est un "ou exclusif".

Avantageusement, pour le changement dudit aléa, le procédé comprend deux étapes successives :
- une première étape d'activation dans laquelle on transmet ledit mot témoin audit module d'habilitation, lequel fournit en retour ledit mot de validation permettant de calculer ledit mot de contrôle par combinaison avec ledit mot interne préalablement stocké dans ledit module d'exploitation ;
- une seconde étape "de réarmement" mise en oeuvre au moment de la présence dudit mot de contrôle temporaire et fugitif, et consistant à tirer un nouvel aléa puis à calculer et stocker ledit mot interne et ledit mot témoin dans le module d'exploitation.

De cette façon, on peut changer le mot témoin et le mot de validation. Ceci permet d'éviter, lors d'une simulation éventuelle du dialogue entre le module d'habilitation et le module d'exploitation par un usager non autorisé, le calcul du mot de contrôle par le module d'exploitation sur simple présentation du mot de validation ayant pu être subtilisé lors d'un accès précédent de l'usager autorisé. L'aléa n'est jamais stocké, et dès que le mot interne est stocké, tant l'aléa que le mot de contrôle peuvent disparaître.

Pour plus de sécurité, ledit changement d'aléa est périodique ou aléatoire.

Avantageusement, lesdites première et seconde fonctions de chiffrement constituent deux fonctions complémentaires issues de la combinaison de deux fonctions de chiffrement/déchiffrement asymétriques à clé publique comprenant chacune une fonction publique et une fonction secrète complémentaires, ladite première fonction de chiffrement correspondant à la combinaison par application successive, de la fonction secrète de la première fonction asymétrique avec la fonction publique de la seconde fonction asymétrique,

ladite seconde fonction de chiffrement correspondant à la combinaison, par application successive de la fonction secrète de la seconde fonction asymétrique avec la fonction publique de la première fonction asymétrique.

Cette première version du procédé de l'invention est satisfaisante dans le cas où le mot de contrôle est utilisé pour sa valeur numérique propre dans le module d'exploitation : il en est ainsi, par exemple, lorsqu'il sert à générer un cryptogramme de chiffrement/déchiffrement par initialisation d'un générateur de données pseudo-aléatoires tel qu'un Générateur d'Octets Chiffrants (GOC).

Toutefois, avantageusement, le procédé de contrôle d'accès est en outre combiné avec les étapes suivantes :

- on calcule et on stocke dans le module d'exploitation une empreinte d'origine dudit mot de contrôle, ladite empreinte d'origine étant l'image par une fonction irréversible dudit mot de contrôle;
- on calcule, lors de chaque accès, une empreinte courante de ladite valeur de mot de contrôle à l'aide de ladite fonction irréversible, l'accès à ladite fonction d'exploitation étant autorisé seulement si le résultat de la comparaison entre l'empreinte d'origine et l'empreinte courante est positif.

De cette façon, la vérification de l'empreinte du mot de contrôle constitue un contrôle d'accès logique, préalable à l'activation de la fonction d'exploitation.

Avantageusement, ladite apparition temporaire et fugitive du mot de contrôle dans le module d'exploitation correspond à un calcul dudit mot de contrôle dans une mémoire vive dudit module d'exploitation.

Ainsi, le mot de contrôle étant stocké en mémoire vive (RAM (Random Access Memory) en anglais), il disparaît lorsque cette mémoire n'est plus alimentée.

Préférentiellement, ladite fonction d'exploitation appartient à un groupe comprenant :

- l'écriture de données chiffrées ;
- la lecture de données chiffrées ;
- l'exécution de fonctions utilisant des données chiffrées ;

et lesdites données chiffrées sont stockées dans une mémoire dudit module d'exploitation.

Dans un mode de réalisation particulier de l'invention, ladite fonction de combinaison est stockée à l'extérieur dudit module d'exploitation.

Dans un autre mode de réalisation particulier de l'invention, ledit mot externe est composé d'au moins deux sous-mots externes.

Dans ce cas, chaque sous-mot externe constitue par exemple un code d'accès (externe) pouvant être détenu par un usager différent, l'accès à la fonction d'exploitation étant alors subordonné à la fourniture d'un code d'accès (sous-mot externe) par chacun des utilisateurs.

Comme déjà mentionné, dans un mode de réalisation préférentiel de l'invention, ledit mot de contrôle initialise un générateur d'octets chiffrants (GOC), ce GOC pouvant avantageusement être utilisé pour une fonction de chiffrement/déchiffrement.

Dans le cas d'un mot de contrôle contrôlant le chiffrement/déchiffrement de données stockées de façon permanente en mémoire, le contrôle d'accès est logique, avec la vérification d'empreinte, mais également physique puisque les données stockées en mémoire sont chiffrées et donc non compréhensibles par un éventuel usager non autorisé qui lirait le contenu de la mémoire.

De façon avantageuse, la valeur du mot de contrôle étant déterminée, on modifie le couple mot interne/mot externe d'une part en substituant un nouveau mot interne au mot interne courant stocké dans le module d'exploitation, et d'autre part en substituant au mot externe courant le nouveau mot externe associé audit nouveau mot interne.

Ainsi, l'usager peut changer de mot externe (code d'accès), le mot interne étant modifié en conséquence, sans que la valeur du mot de contrôle soit changée.

Ceci est particulièrement avantageux lorsque le mot de contrôle sert à chiffrer ou à déchiffrer des données mémorisées dans le module d'exploitation. En effet, dans ce cas, un changement de mot externe de l'usager et du mot interne corrrespondant n'implique pas un nouveau chiffrement de la mémoire.

Ainsi, le contrôle d'accès physique est strict (il faut posséder le mot de contrôle pour chiffrer ou déchiffrer des données) sans toutefois rendre complexe et rigide le contrôle d'accès logique (une modification du mot externe n'entraîne pas un nouveau chiffrement de la mémoire).

Avantageusement, ledit module d'exploitation est accessible à un même moment à l'aide d'au moins deux couples mot interne/mot externe distincts, chacune des combinaisons d'un mot interne avec le mot externe du même couple permettant de reconstituer ledit mot de contrôle, de façon que deux usagers distincts soient l'un et l'autre autorisés d'accès sans qu'ils possèdent le même mot externe d'accès.

De cette façon, tout en conservant un procédé de contrôle d'accès à mot de contrôle unique, chaque usager possède son propre mot externe (code d'accès).

D'autres caractéristiques et avantages de l'invention apparaîtront à la lecture suivante de deux modes de réalisation préférentiels de l'invention, donnés à titre d'exemple indicatif et non limitatif, et des dessins annexés dans lesquels :

- la figure 1 présente un schéma de principe d'un procédé de contrôle d'accès selon l'invention ;
- la figure 2 présente un schéma simplifié d'un mode de réalisation préférentiel d'un procédé tel que présenté sur la figure 1, dans le cas où le mot de contrôle initialise un GOC utilisé pour une fonction de chiffrement/déchiffrement ;
- la figure 3 présente un schéma simplifié de la mémoire dans le cas d'un mode de réalisation combinant le procédé selon l'invention et un procédé dans lequel un usager fournit directement le mot de calcul externe au module d'exploitation.

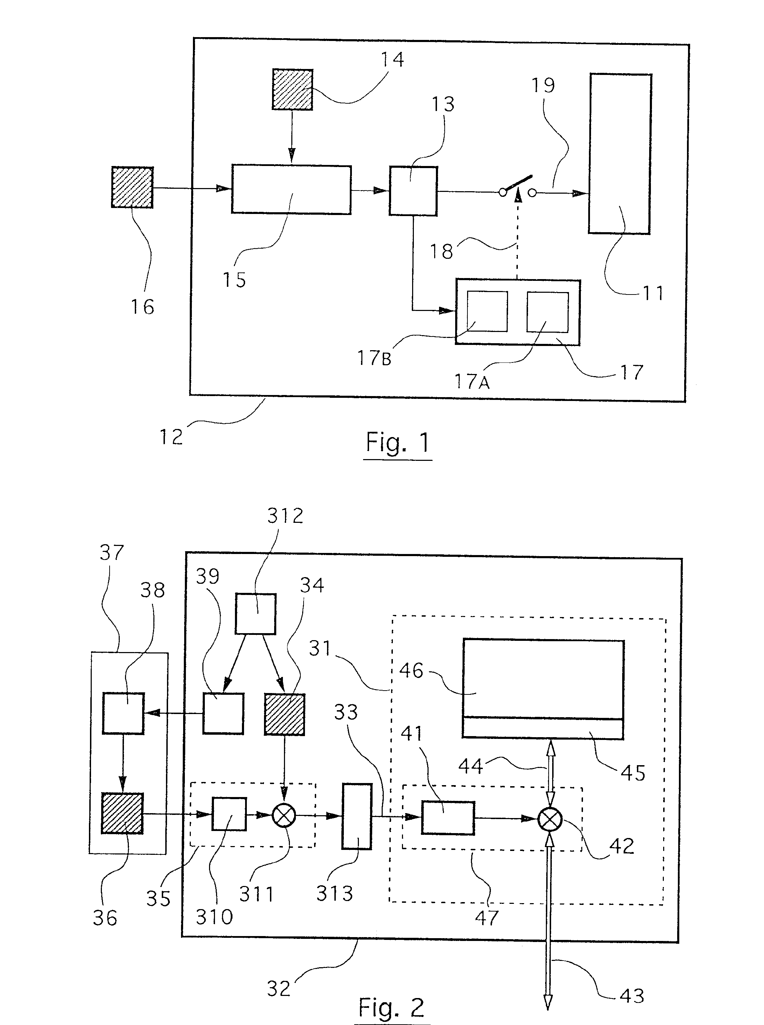

Le procédé de contrôle d'accès selon l'invention, dont le schéma de principe est présenté sur la figure 1, est du type autorisant l'accès à une fonction d'exploitation 11 d'un module d'exploitation 12 à l'aide d'un mot de contrôle 13, après que ce mot de contrôle 13 a subi une vérification d'empreinte (17).

Dans ce procédé, et contrairement aux autres procédés du même type, la valeur du mot de contrôle 13 n'est ni connue d'un usager, ni stockée dans le module d'exploitation 12.

En effet, on stocke dans ledit module d'exploitation 12 uniquement un mot de calcul interne 14 distinct du mot de contrôle 13, ainsi qu'une fonction de combinaison 15.

Lorsqu'un usager désire accéder à la fonction d'exploitation 11 du module d'exploitation 12, il fournit un second mot de calcul externe 16. La valeur du mot de contrôle 13 est alors calculée en combinant le mot interne 14 et le mot externe 16 à l'aide de la fonction de combinaison 15.

D'une part, cette valeur de mot de contrôle 13 permet d'exécuter la fonction d'exploitation 11. Cela constitue le contrôle d'accès physique (19). D'autre part, cette valeur de mot de contrôle 13 est utilisée par un module 17 de vérification d'empreinte qui calcule l'empreinte courante 17B de cette valeur de mot de contrôle 13 et la compare à valeur de l'empreinte d'origine 17A. Cette vérification d'empreinte (17) constitue un contrôle d'accès logique à la fonction d'exploitation 11.

Le contrôle d'accès physique (19) peut être dépendant du contrôle d'accès logique (18).

Dès que l'accès à la fonction d'exploitation 11 a été autorisé, le mot de contrôle 13 calculé peut disparaître. En d'autres termes, le mot de contrôle 13 n'apparaît que de façon temporaire et fugitive dans le module d'exploitation 12.

On peut prévoir de stocker la fonction de combinaison 15 à l'extérieur du module d'exploitation 12.

Par ailleurs, on peut également prévoir un mot externe composé de plusieurs sous-mots externes.

Cela correspond notamment au cas d'un accès autorisé uniquement si deux usagers présentent chacun un sous-mot externe de calcul distinct, la combinaison de ces deux sous-mots externes permettant d'obtenir le mot de contrôle. Comme précédemment, la valeur du mot de contrôle 13 n'est connue ni des deux usagers, ni stockée dans le module d'exploitation 12.

Le mode de réalisation décrit ci-dessous, en relation avec la figure 2, correspond à un procédé de contrôle d'accès à une fonction de chiffrement/déchiffrement à l'aide d'un mot de contrôle égal, dans ce cas, à une clé de chiffrement initialisant un générateur d'octets chiffrants (GOC).

Il est clair toutefois que le procédé de contrôle d'accès selon l'invention peut être aisément adapté à de nombreuses autres applications, sans sortir du cadre de l'invention.

Un mot externe 36 est combiné à un mot interne 34 à l'aide d'une fonction de combinaison 35 afin d'obtenir un mot de contrôle 33. Ce mot de contrôle 33 est transmis à un module 313 de vérification d'empreinte autorisant ou non l'accès à une fonction d'exploitation 31 d'un module d'exploitation 32.

Le fonctionnement de ce module de vérification d'empreinte 313 est le suivant :

- après le calcul initial du mot de contrôle 33, et avant que celui-ci disparaisse, on calcule et on stocke dans le module d'exploitation 32 une empreinte d'origine de ce mot de contrôle 33 ;
- lors de chaque accès, après avoir calculé un mot de contrôle 33 à l'aide des mots interne 34 et externe 36, on calcule l'empreinte correspondante et on la compare à l'empreinte d'origine stockée : l'accès à la fonction d'exploitation 31 n'est autorisé que si les deux empreintes sont identiques.

Les empreintes sont calculées à l'aide d'une fonction irréversible. De cette façon, la valeur de l'empreinte d'origine stockée dans le module d'exploitation ne permet pas d'en déduire le mot de contrôle correspondant.

L'empreinte d'un mot de contrôle peut, par exemple, être obtenue en initialisant un second GOC (non représenté et différent du précédent) avec diverses données dont le mot de contrôle, et en stockant les 16 quartets de poids faible des 16 premiers octets générés par le GOC suite à son initialisation.

Dans ce cas, le mot de contrôle 33 initialise un GOC 41 utilisé pour une fonction de chiffrement/déchiffrement. Les octets chiffrants délivrés par le GOC 41 sont combinés à l'aide d'un "ou exclusif" 42 :

- soit à des données en clair 43 transmises au module d'exploitation 32, les données chiffrées 44 issues de cette combinaison étant ensuite transmises à un module de lecture/écriture 45 permettant de stocker ces données chiffrées 44 dans une mémoire 46 ;

- soit à des données chiffrées 44 lues par un module de lecture/écriture 45 dans une mémoire 46, les données déchiffrées issues de cette combinaison 43 étant ensuite transmises à l'extérieur du module d'exploitation 32.

L'ensemble constitué du GOC associé au "ou exclusif" constitue un dispositif de chiffrement/déchiffrement 47.

On peut imaginer l'exécution de fonctions utilisant des données chiffrées. Dans ce cas, avant d'être exécutées, ces données sont déchiffrées (comme expliqué précédemment) puis exécutées par un microprocesseur (non représenté) interne ou externe au module d'exploitation 32.

Selon l'invention, l'usager ne fournit pas directement le mot externe 36 au module d'exploitation 32 mais se contente de mettre en communication le module d'habilitation 37 avec le module d'exploitation 32.

Ainsi, le mot externe 36 est un mot de validation calculé par le module d'habilitation 37 à partir d'un mot témoin 39 fourni par le module d'exploitation 32.

Lors de l'accès d'un usager au module d'exploitation 32, le calcul du mot de contrôle 33 comprend les étapes suivantes :

- le module d'exploitation 32 fournit un mot témoin 39 (noté M) au module d'habilitation 37. Ce mot témoin, stocké dans le module d'exploitation 32, est constitué d'un aléa (noté A) chiffré selon une première fonction de chiffrement $f_1$ :
$$M = f_1(A).$$
- le module d'habilitation 37 chiffre le mot témoin 39 à l'aide d'une seconde fonction de chiffrement $f_2$ :
$$f_2(M) = f_2(f_1(A)) = N.$$
On peut avantageusement prendre $f_2 = f_1^{-1}$ de façon à obtenir l'aléa 38 (A) utilisé par le module d'exploitation 32 pour calculer le mot témoin 39 :
$$f_2(M) = f_2(f_1(A)) = N = f_1^{-1}(f_1(A)) = A.$$
- le module d'habilitation 37 fournit un mot de validation 36 (noté D) au module d'exploitation 32. Ce mot de validation D est constitué, dans le cas général, du mot noté N chiffré selon une troisième fonction de chiffrement $f_3$ :
$$D = f_3(N).$$
Dans le cas $f_2 = f_1^{-1}$, on a : $D = f_3(A)$.
- le mot de validation 36 (D), égal au mot externe, est combiné à un mot interne 34 à l'aide de la fonction de combinaison 35 afin de calculer le mot de contrôle 33. En fait, le module d'exploitation 32 déchiffre le mot de validation 36 (D) à l'aide d'une quatrième fonction de chiffrement $f_4$ de façon à obtenir l'aléa 38, 310 (A) utilisé pour calculer le mot témoin 39 :
$$f_4(D) = f_4(f_3(N)) = f_4(f_3(f_2(M))) = f_4(f_3(f_2(f_1(A)))) = A.$$
Dans le cas $f_2 = f_1^{-1}$, on a : $f_4(D) = f_4(f_3(A)) = A$, et on a donc obligatoirement $f_4 = f_3^{-1}$.

Afin d'optimiser le procédé, les troisième et quatrième fonctions de chiffrement $f_3$ et $f_4$ peuvent par exemple être avantageusement égales respectivement aux seconde et première fonctions de chiffrement $f_2$ et $f_1$, avec de plus $f_2 = f_1^{-1}$. Cette solution optimale ne nécessite que deux fonctions de chiffrement ($f_1$ et $f_2$) au lieu de quatre dans le cas général ($f_1$, $f_2$, $f_3$, $f_4$).

Par ailleurs, le mot interne $C_I$ 34, stocké dans le module d'exploitation 32 est le résultat de la combinaison du mot de contrôle C avec l'aléa 38, 310, 312 à l'aide d'un "ou exclusif" 311 :
$$C_I = C \oplus A.$$
Ainsi, en combinant à l'aide d'un "ou exclusif" d'une part l'aléa 38, 310, 312 obtenu en déchiffrant le mot de validation 36, et d'autre part le mot interne 34, on obtient le mot de contrôle 33 :
$$C_I \oplus A = (C \oplus A) \oplus A = C$$
Dans le cas optimal, la fonction de combinaison 35 est donc constituée :

- de la première fonction de chiffrement $f_1$ permettant de déchiffrer le mot de validation 36 afin d'obtenir l'aléa 310, et
- du "ou exclusif" 311 permettant de combiner l'aléa 310 avec le mot interne 34.

Les première et seconde fonctions de chiffrement $f_1$ et $f_2$, dans le cas $f_2 = f_1^{-1}$, sont par exemple avantageusement issues de la combinaison de deux fonctions (P1, S1) et (P2, S2) de chiffrement/déchiffrement asymétriques à fonction publique comprenant chacune une fonction publique ($P_1$ et $P_2$) et une fonction secrète ($S_1$ et $S_2$ respectivement) complémentaires.

Ainsi, la première fonction de chiffrement $f_1$ correspond à la combinaison de la fonction secrète de la première fonction asymétrique ($P_1$, $S_1$) avec la fonction publique de la seconde fonction asymétrique (P2, S2) :
$$f_1 = P2.S1.$$
De même, la seconde fonction de chiffrement $f_2$ correspond à la combinaison, par application successive, de la fonction publique de la première fonction asymétrique (P1, S1) avec la fonction secrète de la seconde fonction asymétrique (P2, S2) :
$$f_2 = P1.S2.$$
Avant le premier accès d'un usager, on tire un premier aléa utilisé ensuite comme mot de contrôle et un second aléa utilisé comme aléa de chiffrement. A l'aide de cette clé (aléatoire) et de ce second aléa de chiffrement, on calcule et on stocke dans le module d'exploitation 32 un mot interne 34 et un mot témoin 39 qui sont utilisés lors de l'accès au module d'exploitation 32. Ensuite, le mot de contrôle peut disparaître, ainsi que l'aléa de chiffrement.

Afin d'augmenter la sécurité du procédé, on peut envisager de changer le mot de témoin 39 et le mot de validation 36 lors de chaque accès. Ce changement peut également être effectué de façon périodique ou aléatoire.

Le changement de mot de contrôle 39 et de mot de validation 36, consiste à utiliser un nouvel aléa 38, 310 et comprend les deux étapes suivantes :

- une première étape d'activation dans laquelle :
  * on transmet le mot de témoin 39 au module d'habilitation 37,
  * en retour, le module d'habilitation 37 fournit un mot de validation 36 au module d'exploitation 32,
  * à l'aide de la fonction de combinaison 35, le module d'exploitation 32 calcule le mot de contrôle 33 en combinant le mot de validation 36 et le mot interne 34.
- une seconde étape de "réarmement", mise en oeuvre au moment de la présence du mot de contrôle C temporaire et fugitif, dans laquelle :
  * on tire un nouvel aléa 312 (A),
  * on calcule et on stocke dans le module d'exploitation 32 :
    . un nouveau mot interne 34 : $C_I = C \oplus A$,
    . un nouveau mot témoin 39 : $M = f_1(A)$.

Il est possible de combiner le procédé de l'invention (dont un mode de réalisation est présenté ci-dessus) avec un autre type de procédé de contrôle d'accès. Ainsi, on peut prévoir que le mot de contrôle C autorisant l'accès à une fonction d'exploitation d'un module d'exploitation résulte de la combinaison, à l'aide d'un "ou exclusif" par exemple, d'un premier et d'un second mots de contrôle intermédiaires C1 et C2 obtenus respectivement à partir d'un premier mot externe $C_E$ fourni directement par un usager et d'un second mot externe (ou mot de validation) fourni par un module d'habilitation.

Le premier mot de contrôle intermédiaire C1 est par exemple déterminé de la façon suivante :

- l'usager fournit un mot externe $C_E$ ;
- le premier mot de contrôle intermédiaire C1 est calculé en effectuant un "ou exclusif" entre un mot interne $C_I$ et le mot externe $C_E$ :
$$C1 = C_I \oplus C_E$$

Ce premier mot de contrôle intermédiaire C1 n'apparaît que de façon temporaire et fugitive, seul le mot interne $C_I$ étant stocké dans le module d'exploitation.

La détermination du second mot de contrôle intermédiaire C2 est celle proposée dans le procédé selon l'invention et décrite en relation avec la figure 2.

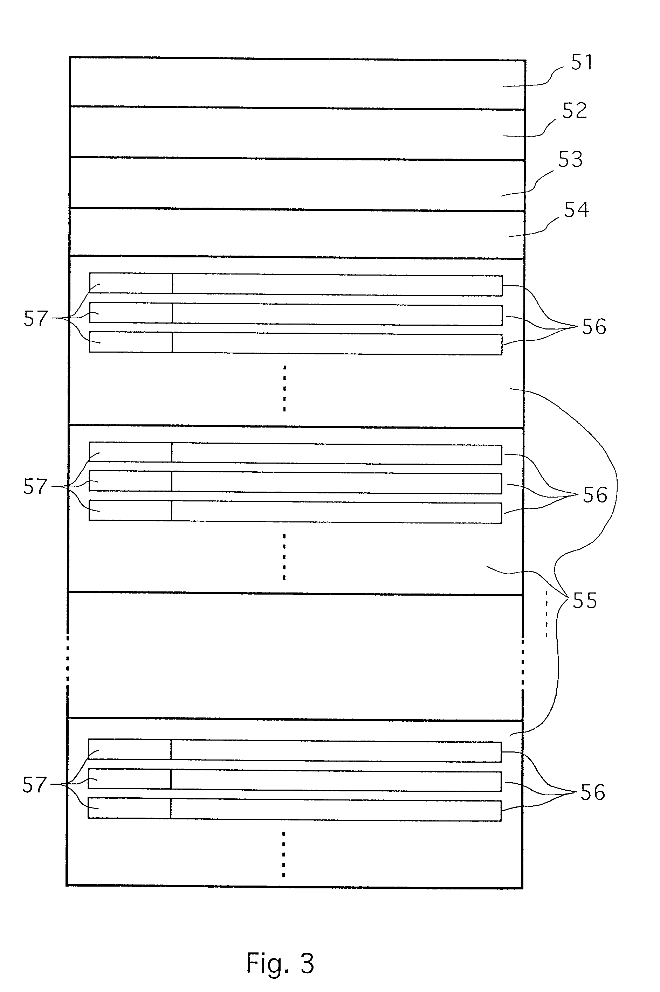

La figure 3 présente un schéma simplifié de la mémoire lors d'une telle combinaison de deux types de procédé. Dans cet exemple, le mot de contrôle C initialise un GOC utilisé pour une fonction de chiffrement/déchiffrement. La mémoire est découpée en zones et comprend notamment :

- une zone 51 contenant des verrous et des descripteurs ;
- une zone 52 contenant un mot interne $C_I$ (ou

plusieurs, dans le cas d'un procédé multiutilisateurs) permettant, combiné à un mot externe $C_E$ fourni directement par l'usager, de calculer le premier mot de contrôle intermédiaire C1;

- une zone 53 contenant la première fonction de chiffrement $f_1$ et un mot interne permettant, combiné à un mot externe (ou mot de validation) fourni par un module d'habilitation, de calculer le second mot de contrôle intermédiaire C2 ;
- une zone 54 contenant trois empreintes d'origine correspondant au mot de contrôle C et aux deux mots de contrôle intermédiaires C1 et C2 ;
- des zones 55 contenant des données.

Pour l'ensemble de la mémoire, le chiffrement est contrôlé par un verrou V-CME. Ce verrou est un élément binaire dont l'état indique si le chiffrement peut effectivement avoir lieu. Les descripteurs précisent, pour chacune des autres zones, les caractéristiques suivantes :

- adresse de début de zone ;
- adresse de fin de zone ;
- nombre et format des blocs stockés dans la zone.

Les zones 55 contenant des données sont découpées en blocs 56. Chaque en-tête 57 de bloc comprend deux éléments binaires V-C1 et V-C2 indiquant le mode de chiffrement (lors de l'écriture) des données du bloc, parmi trois modes possibles, à savoir :

  * chiffrement à l'aide du mot de contrôle C (combinaison des deux mots de contrôle intermédiaires C1 et C2) :
      V - C1 = 1 et V - C2 = 1 ;
  * chiffrement à l'aide du premier mot de contrôle intermédiaire C1 :
      V - C1 = 1 et V - C2 = 0;
  * chiffrement à l'aide du second mot de contrôle intermédiaire C2 :
      V - C1 = 0 et V - C2 = 1;

Quel que soit le mode chiffrement choisi, les données sont chiffrées lors de leur écriture dans le bloc en fonction de l'état des verrous V-C1 et V-C2.

Le déchiffrement a lieu soit lors de la lecture, soit lors de l'exécution d'un bloc chiffré, et consiste à mettre en oeuvre à nouveau le procédé utilisé lors du chiffrement.

## Revendications

1. Procédé de contrôle d'accès du type autorisant l'accès à une fonction d'exploitation (11 ; 31) d'un module d'exploitation (12 ; 32) à l'aide d'un mot de contrôle (13 ; 33),
caractérisé en ce que ledit procédé comprend les étapes suivantes:

- on stocke dans ledit module d'exploitation (12 ; 32):

     . d'une part un mot de calcul interne (14 ; 34) distinct dudit mot de contrôle (13 ; 33),

     . d'autre part une fonction de combinaison (15 ; 35) ;

- on fournit un mot de calcul externe (16 ; 36) permettant de calculer une valeur de mot de contrôle (13 ; 33) en combinant ledit mot interne (14 ; 34) et ledit mot externe (16 ; 36) à l'aide de ladite fonction de combinaison (15 ; 35) , ledit mot de calcul externe (16 ; 36) n'étant pas stocké dans le module d'exploitation (12 ; 32) ;

     ledit mot de contrôle (13 ; 33) n'apparaissant que de façon temporaire et fugitive dans le module d'exploitation (12 ; 32) pendant un laps de temps prédéterminé nécessaire à l'accès à ladite fonction d'exploitation (11 ; 31);

et en ce que ledit mot externe (36) est un mot de validation calculé par un module d'habilitation (37) à partir d'un mot témoin (39) fourni par ledit module d'exploitation (32).

2. Procédé selon la revendication 1, caractérisé en ce que :

   - ledit mot témoin (39) est constitué par un aléa (312) chiffré selon une première fonction de chiffrement,
   - ledit aléa (312) est retrouvé par ledit module d'habilitation (32) grâce au chiffrement dudit mot témoin (39) par une seconde fonction de chiffrement, lesdites première et seconde fonctions de chiffrement étant deux fonctions réciproques,
   - ledit mot de validation (36) est constitué par ledit aléa retrouvé (38) chiffré selon ladite seconde fonction de chiffrement,
   - ledit mot interne (34) est constitué par un cryptogramme du mot de contrôle (33) avec ledit aléa (312),
   - ledit mot de contrôle (33) est reconstitué dans le module d'exploitation (32) en combinant à l'aide de ladite fonction de combinaison (35) ledit mot interne (34) avec ledit mot de validation (36), ladite fonction de combinaison permettant d'une part de retrouver ledit aléa (38) grâce au chiffrement dudit mot de validation (36) par ladite première fonction de chiffrement et d'autre part de combiner, selon un opérateur mathématique prédéterminé, ledit aléa retrouvé (310) et ledit mot interne (34).

3. Procédé selon la revendication 2, caractérisé en ce que ledit opérateur mathématique prédéterminé est un "ou exclusif".

4. Procédé selon l'une quelconque des revendications 2 et 3, caractérisé en ce que, pour le changement dudit aléa (38, 310, 312), il comprend deux étapes successives :

   - une première étape d'activation dans laquelle on transmet ledit mot témoin (39) audit module d'habilitation (37), lequel fouit en retour ledit mot de validation (36) permettant de calculer ledit mot de contrôle (33) par combinaison avec ledit mot interne (34) préalablement stocké dans ledit module d'exploitation (32) ;

   - une seconde étape "de réarmement" mise en oeuvre au moment de la présence dudit mot de contrôle (33) temporaire et fugitif, et consistant à tirer un nouvel aléa puis à calculer et stocker ledit mot interne (34) et ledit mot témoin (39) dans le module d'exploitation (32).

5. Procédé selon la revendication 4, caractérisé en ce ledit changement d'aléa est périodique ou aléatoire.

6. Procédé selon l'une quelconque des revendications 2 à 5, caractérisé en ce que lesdites première et seconde fonctions de chiffrement constituent deux fonctions complémentaires issues de la combinaison de deux fonctions de chiffrement/déchiffrement asymétriques à clé publique comprenant chacune une fonction publique et une fonction secrète complémentaires, ladite première fonction de chiffrement correspondant à la combinaison, par application successive, de la fonction secrète de la première fonction asymétrique avec la fonction publique de la seconde fonction asymétrique

   ladite seconde fonction de chiffrement correspondant à la combinaison, par application successive, de la fonction secrète de la seconde fonction asymétrique avec la fonction publique de la première fonction asymétrique.

7. Procédé selon l'une quelconque des revendications 1 à 6, caractérisé en ce qu'il comporte en outre les étapes suivantes :

   - on calcule et on stocke dans le module d'exploitation (12 ; 32) une empreinte d'origine (17A) dudit mot de contrôle (13 ; 33), ladite empreinte d'origine (17A) étant l'image par une fonction irréversible dudit mot de contrôle (13 ; 33) ;

   - on calcule, lors de chaque accès, une empreinte courante (17B) de ladite valeur de mot de contrôle recombinée à l'aide de ladite fonction irréversible, l'accès à ladite fonction d'exploitation (11 ; 31) étant autorisé seulement si le résultat de la comparaison entre l'empreinte d'origine (17A) et l'empreinte courante (17B) est positif.

8. Procédé selon l'une quelconque des revendications 1 à 7, caractérisé en ce que ladite apparition temporaire et fugitive du mot de contrôle (13 ; 33) dans le module d'exploitation (12 ; 32) correspond à un calcul dudit mot contrôle dans une mémoire vive dudit module d'exploitation.

9. Procédé selon l'une quelconque des revendications 1 à 8, caractérisé en ce que ladite fonction d'exploitation (11 ; 31) appartient à un groupe comprenant:
   - l'écriture de données chiffrées ;
   - la lecture de données chiffrées ;
   - l'exécution de fonctions utilisant des données chiffrées.

10. Procédé selon la revendication 9, caractérisé en ce que lesdites données chiffrées sont stockées dans une mémoire (46) dudit module d'exploitation (12 ; 32).

11. Procédé selon l'une quelconque des revendications 1 à 10, caractérisé en ce que ladite fonction de combinaison (15 ; 35) est stockée à l'extérieur dudit module d'exploitation (12 ; 32).

12. Procédé selon l'une quelconque des revendications 1 à 11, caractérisé en ce que ledit mot externe (16 ; 36) est composé d'au moins deux sous-mots externes.

13. Procédé selon l'une quelconque des revendications 1 à 12, caractérisé en que ledit mot de contrôle (13 ; 33) initialise un générateur de données pseudo-aléatoires du type des générateurs d'octets chiffrants (41).

14. Procédé selon la revendication 13, caractérisé en ce que ledit générateur de données pseudo-aléatoires (41) est utilisé pour une fonction de chiffrement/déchiffrement (47).

15. Procédé selon la revendication 14, caractérisé en ce que ledit module d'exploitation est accessible à un même moment à l'aide d'au moins deux couples mot interne (14 ; 34) / mot externe (16 ; 36) distincts, chacune des combinaisons d'un mot interne avec le mot externe du même couple permettant de reconstituer ledit mot de contrôle (13 ; 33), de façon que deux usagers distincts soient l'un et l'autre autorisés d'accès sans qu'ils possèdent le même mot externe d'accès.

Fig. 1

Fig. 2

Fig. 3

**Office européen des brevets**

## RAPPORT DE RECHERCHE EUROPEENNE

Numero de la demande

EP    93 46 0018

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | EP-A-0 334 503 (RACAL-GUARDATA)<br>* abrégé; figure 1 *<br>* colonne 1, ligne 1 - colonne 2, ligne 40 *<br>* colonne 3, ligne 31 - ligne 40 * | 1-15 | G07F7/10<br>G06F12/14<br>G06F1/00 |
| | --- | | |
| Y | EP-A-0 137 999 (IBM)<br>* abrégé; figure 3 *<br>* colonne 7, ligne 8 - colonne 8, ligne 21 *<br>* revendications 1-3 * | 7,8,11 | |
| | --- | | |
| Y | EP-A-0 434 550 (BULL CP8)<br>* abrégé; figure 3 *<br>* colonne 1, ligne 1 - colonne 2, ligne 29 *<br>* colonne 15, ligne 22 - colonne 18, ligne 29 * | 13,14 | |
| A | | 1 | |
| | --- | | |
| Y | EP-A-0 253 722 (BULL CP8)<br><br>* le document en entier * | 1-6,9,<br>10,12-15 | **DOMAINES TECHNIQUES RECHERCHES (Int. Cl.5 )** |
| A | | 7,8 | G07F<br>G06F<br>H04L |
| | --- | | |
| Y | EP-A-0 202 768 (IBM)<br>* le document en entier * | 6,10 | |
| | --- | | |
| Y | DE-A-3 905 703 (ASCOM RADIOCOM AG)<br>* abrégé * | 4,5 | |
| | ----- | | |

Le présent rapport a été établi pour toutes les revendications

| Lieu de la recherche | Date d'achèvement de la recherche | Examinateur |
|---|---|---|
| LA HAYE | 02 AOUT 1993 | POWELL D. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)